(19) Europäisches Patentamt
European Patent Office
Office européen des brevets

(11) **EP 3 577 364 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **18701666.2**

(22) Anmeldetag: **16.01.2018**

(51) Int Cl.:
*F16D 59/02* (2006.01)    *F16D 65/00* (2006.01)
*F16D 121/22* (2012.01)

(86) Internationale Anmeldenummer:
**PCT/EP2018/025011**

(87) Internationale Veröffentlichungsnummer:
**WO 2018/141481 (09.08.2018 Gazette 2018/32)**

(54) **ELEKTROMAGNETISCH BETÄTIGBARE BREMSANORDNUNG ZUM ABBREMSEN EINER DREHBAR GELAGERTEN WELLE**

ELECTROMAGNETICALLY ACTUATABLE BRAKE ARRANGEMENT FOR BRAKING A ROTATABLY MOUNTED SHAFT

SYSTÈME DE FREINAGE À COMMANDE ÉLECTROMAGNÉTIQUE POUR LE FREINAGE D'UN ARBRE MONTÉ À ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 DE 102017000846**

(43) Veröffentlichungstag der Anmeldung:
**11.12.2019 Patentblatt 2019/50**

(73) Patentinhaber: **SEW-EURODRIVE GmbH & Co. KG 76646 Bruchsal (DE)**

(72) Erfinder: **FICHTNER-PFLAUM, Gerolf 76703 Kraichtal-Unteröwisheim (DE)**

(56) Entgegenhaltungen:
**DE-C1- 19 622 983    US-A- 5 274 290
US-B1- 6 321 883**

**Beschreibung**

Die Erfindung betrifft eine elektromagnetisch betätigbare Bremsanordnung zum Abbremsen einer drehbar gelagerten Welle.

Aus der US 5 274 290 A ist als nächstliegender Stand der Technik eine elektromagnetisch betätigbare Bremsanordnung mit Spule bekannt.

Aus der DE 196 22 983 C1 ist eine elektromagnetisch betätigte Bremse bekannt, bei welcher ein Dämpfungsblech aus federndem Metall vorgesehen ist.

Aus der US 6 321 883 B1 ist eine elektromagnetisch betätigbare Bremse bekannt, bei der ein Dämpfungsblech zwischen der Bremsspule und einer Ankerscheibe angeordnet ist.

Der Erfindung liegt daher die Aufgabe zugrunde, eine Bremsanordnung weiterzubilden, wobei die Geräuschbildung verringert sein soll und ein hohe Standzeit der Bremsanordnung erreichbar sein soll.

Erfindungsgemäß wird die Aufgabe bei der Bremsanordnung nach den in Anspruch 1 angegebenen Merkmalen gelöst.

Wichtige Merkmale der Erfindung bei der elektromagnetisch betätigbaren Bremsanordnung zum Abbremsen einer drehbar gelagerten Welle sind, dass sie einen Magnetkörper, eine Spule, ein Federelement, eine Ankerscheibe, einen Bremsbelagträger, ein Dämpfungsblech und eine Reibscheibe aufweist,

wobei das Dämpfungsblech zwischen Ankerscheibe und Magnetkörper angeordnet ist,

wobei das Dämpfungsblech Erhebungen,

wobei jede der Erhebungen in radialer Richtung weiter ausgedehnt ist als in Umfangsrichtung,

insbesondere wobei die Erhebungen jeweils axial hervorragen,

insbesondere zumindest eine Teilmenge der Erhebungen in Umfangsrichtung regelmäßig voneinander beabstandet ist.

Von Vorteil ist dabei, dass keine punktförmigen Erhebungen, sondern linienhafte Erhebungen verwendet werden. Somit ist eine hohe Standzeit bei gleichzeitig effektiver Geräuschminderung erreichbar. Wenn nämlich die Ankerscheibe von der bestromten Spule zum Magnetkörper hin angezogen wird, schlägt sie auf das Dämpfungsblech, also Dämpfungsscheibe, auf. Dabei wirken die Erhebungen auf die auftreffende Ankerscheibe elastisch federnd und bremsen somit die Wucht beim Aufschlagen ab. Die Geräuschbildung ist daher verringert. Die Verformung der Erhebungen liegt im elastischen Bereich, so dass eine hohe Standzeit erreichbar ist.

Besonderer Vorteil der Erfindung ist die linienhafte Erstreckung der Erhebungen in radialer Richtung, welche eine geringere elastische Auslenkung zur Folge hat im Vergleich zu noppenartigen, also punktförmigen, Erhebungen. Somit ist die Standzeit erhöht.

Wenn die Ankerscheibe einen winzigen Taumelwinkel oder Kippwinkel beim Aufschlagen aufweist und somit an einer radial äußeren Stelle des Dämpfungsblechs zuerst aufschlägt, wirkt die erfindungsgemäße linienhafte Ausführung besser im Vergleich zu einer mit noppenähnlichen, also punktförmigen, Erhebungen versehenen Ausführung. Denn der Aufschlag ist erfindungsgemäß schon etwas früher und daher effektiver abdämpfbar.

Bei einer vorteilhaften Ausgestaltung weist jede der Erhebungen eine in tangentialer Richtung gemessene konstante Breite auf. Von Vorteil ist dabei, dass eine einfache Herstellung ausführbar ist. Denn die Form muss nur entsprechend einfach gestaltet sein.

Bei einer vorteilhaften Ausgestaltung weist jede der Erhebungen eine in tangentialer Richtung gemessene Breite auf, die mit zunehmendem Radialabstand zunimmt, insbesondere monoton zunimmt. Von Vorteil ist dabei, dass bei geeigneter Zunahme der in Umfangsrichtung gemessenen Erstreckung der jeweiligen Erhebung das Verhältnis der insgesamt erhobenen Umfangswinkelbereiche zu den insgesamt nicht erhobenen Umfangswinkelbereichen unabhängig vom Radialabstand ausführbar ist. Somit ist eine gleichförmige Verteilung der Erhebungen oder der insgesamt erhobenen Bereichs ermöglicht.

Bei einer vorteilhaften Ausgestaltung ist die Spule in einer ringförmigen Ausnehmung des Magnetkörpers aufgenommen, wobei die Ringachse der ringförmigen Ausnehmung koaxial zur Drehachse der Welle ausgerichtet ist. Von Vorteil ist dabei, dass der Magnetkörper als magnetischer Rückschluss fungiert und somit eine effektive Bremsanordnung herstellbar ist.

Bei einer vorteilhaften Ausgestaltung erstreckt sich jede der Erhebungen radial bis zum Rand des Dämpfungsblechs erstreckt. Von Vorteil ist dabei, dass eine optimale Wirkung bei der Geräuschdämpfung erzielbar ist. Denn auch am Rand, also beim größten Radialabstand, ist die aufschlagende Wucht der Ankerscheibe abgedämpft.

Bei einer vorteilhaften Ausgestaltung erstreckt sich jede der Erhebungen bis zum radial äußeren Randbereich des Dämpfungsblechs. Von Vorteil ist dabei, dass insbesondere radial außen die Ankerscheibe abgedämpft wird. Dies ist besonders dann wichtig, wenn die Ankerscheibe einen winzigen Taumelwinkel oder Kippwinkel aufweist und somit am radial äußeren Rand der Dämpfungsblechs zuerst aufschlägt. Insbesondere auch im Vergleich zu einer mit punktförmigen, also noppenähnlichen, Erhebungen versehenen Ausführung ist der Aufschlag erfindungsgemäß schon etwas früher und daher effektiver abdämpfbar.

und/oder dass der von jeder der Erhebungen im von ihr überdeckten Umfangswinkelbereich einen Radialabstandsbereich überdeckt, dessen maximaler Radialabstandswert dem maximalen Radialabstandswert des von des Dämpfungsblechs in dem selben Umfangswinkelbereich überdeckten Radialabstandsbereich gleicht.

Bei einer vorteilhaften Ausgestaltung ist das Dämpfungsblech als Metallblech ausgeführt, insbesondere als metallisches Stanz-Biegeteil. Von Vorteil ist dabei, dass eine einfache und kostengünstige Herstellung ermöglicht ist.

Bei einer vorteilhaften Ausgestaltung ist die Spule in einer ringförmigen Ausnehmung des Magnetkörpers aufgenommen, insbesondere wobei die Spule in der ringförmigen Ausnehmung mit Vergussmasse vergossen ist. Von Vorteil ist dabei, dass eine einfache Herstellung ermöglicht ist und mittels der Vergussmasse Toleranzen ausgleichbar sind, so dass mechanische Stabilität erreichbar ist.

Bei einer vorteilhaften Ausgestaltung ist das Federelement im Magnetkörper abgestützt und drückt auf die Ankerscheibe, so dass bei Bestromung der Spule die Ankerscheibe entgegen der vom Federelement erzeugten Federkraft zum Magnetkörper hingedrückt wird und bei Nichtbestromung der Spule die Ankerscheibe mittels des Federelements von der Spule, insbesondere vom Magnetkörper, weggedrückt wird. Von Vorteil ist dabei, dass bei Stromausfall die Bremse einfällt und bei Bestromung lüftbar ist.

Bei einer vorteilhaften Ausgestaltung ist die Ankerscheibe mit dem Magnetkörper drehfest, aber axial verschiebbar verbunden,

wobei der Bremsbelagträger mit der Welle drehfest, aber axial verschiebbar verbunden ist,

wobei das Reibblech mit dem Magnetkörper verbunden ist, insbesondere nach Art einer Bajonettverbindung. Von Vorteil ist dabei, dass eine einfache robuste Ausführung ermöglicht ist.

Bei einer vorteilhaften Ausgestaltung ist das Dämpfungsblech als Lochscheibe ausgeführt. Von Vorteil ist dabei, dass eine einfache Herstellung als Stanzteil ermöglicht ist.

Bei einer vorteilhaften Ausgestaltung ist das Dämpfungsblech axial zwischen der Spule und der Ankerscheibe angeordnet,

wobei die Ankerscheibe axial zwischen dem Dämpfungsblech und dem Bremsbelagträger angeordnet ist,

wobei der Bremsbelagträger axial zwischen der Ankerscheibe und dem Reibblech angeordnet ist. Von Vorteil ist dabei, dass eine einfache robuste und geräuscharme Bremsanordnung herstellbar ist.

Bei einer vorteilhaften Ausgestaltung weist die Welle eine Außenverzahnung auf oder ein eine Außenverzahnung aufweisendes, mit der Welle drehfest verbundenes Teil,

wobei der Bremsbelagträger eine Innenverzahnung aufweist, die im Eingriff ist mit der Außenverzahnung, insbesondere wobei der Bremsbelagträger drehfest aber axial verschiebbar mit der Außenverzahnung verbunden ist. Von Vorteil ist dabei, dass eine einfache robuste Ausführung ermöglicht ist.

Bei einer vorteilhaften Ausgestaltung weist das Dämpfungsblech eine im Wesentlichen konstante Wandstärke auf,

insbesondere eine in axialer Richtung gemessene, vom Radialabstand und vom Umfangswinkel unabhängigen Wandstärke aufweist. Von Vorteil ist dabei, dass das Dämpfungsblech aus einem kostengünstigen Metallblech herstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

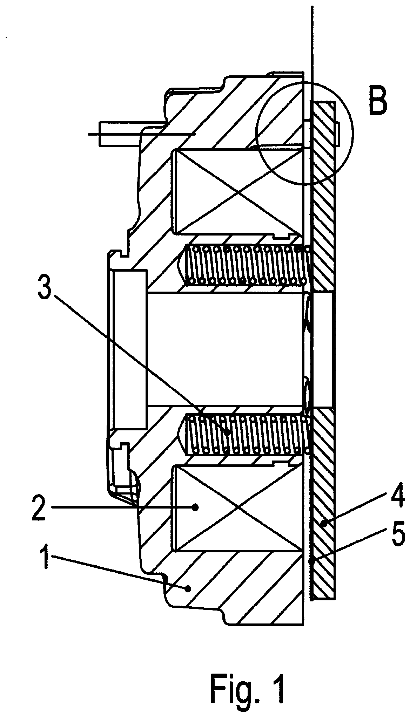

In der Figur 1 ist ein Querschnitt durch einen Teilbereich der erfindungsgemäßen Bremsanordnung mit Dämpfungsblech 5 gezeigt, welches axial zwischen einem Magnetkörper 1 und einer Ankerscheibe 4 angeordnet ist.

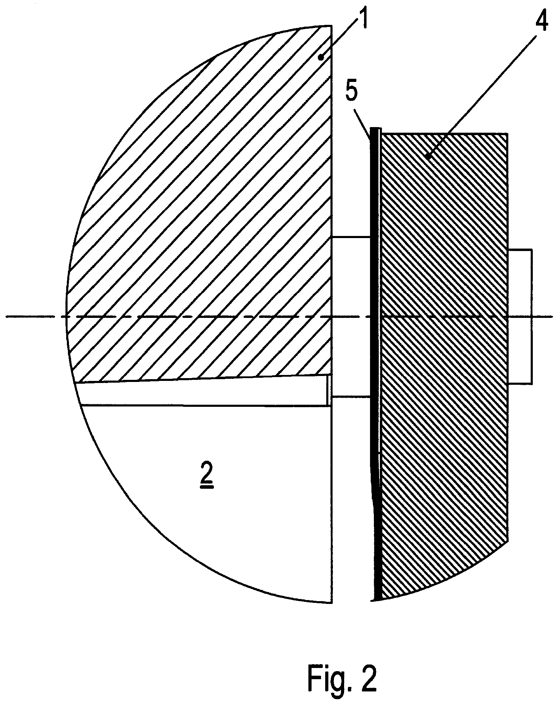

In der Figur 2 ist ein vergrößerter Ausschnitt der Figur 1 gezeigt.

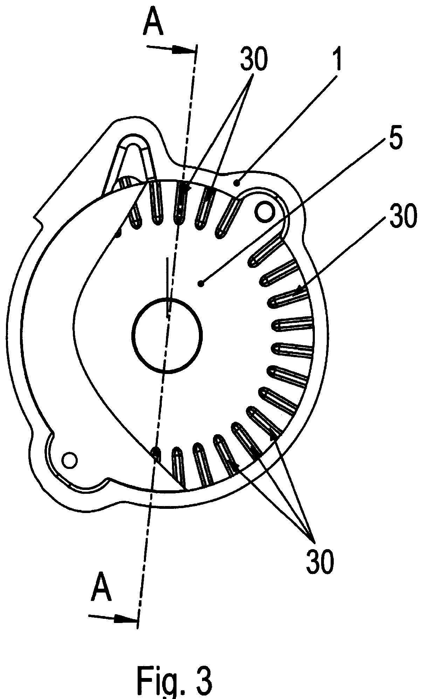

In der Figur 3 ist eine Draufsicht auf die Bremsanordnung bei angeschnittenem Zustand gezeigt.

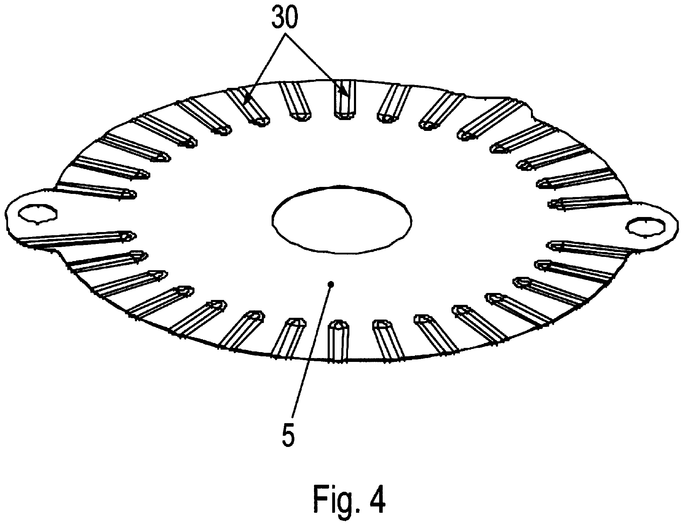

In der Figur 4 ist eine Schrägansicht des Dämpfungsblechs 5 gezeigt.

Wie in den Figuren gezeigt, weist die Bremsanordnung einen Magnetkörper 1 auf, in welchem Ringnut vorgesehen ist, in welcher eine bestrombare Spule 2 aufgenommen ist. Zur Erhöhung von Stabilität und Verringerung von Betriebsgeräuschbildung ist die Spule 2 mittels Vergussmasse in der Ringnut umgossen.

Die Ringachse der Ringnut ist parallel zur Achse der von der Bremsanordnung abzubremsenden Welle ausgerichtet. Die Welle ist konzentrisch zur Ringachse vorsehbar und somit mittig zur Ringnut, zur Spule und/oder zum Magnetkörper ausrichtbar.

Vorzugsweise ist die Welle in einem Motor gelagert, der ein Gehäuseteil aufweist, welches einen Zentrierbund aufweist, so dass der Magnetkörper eine zum Zentrierbund ausrichtbare Zentrierbohrung aufweist. Auf diese Weise ist die Bremsanordnung zur Welle zentrierbar.

Mit der Welle drehfest, aber axial verschiebbar ist ein Bremsbelagträger. Hierzu weist der Bremsbelagträger eine Innenverzahnung auf, die mit einer Außenverzahnung im Eingriff ist, welche an der Welle vorgesehen ist oder an einem drehfest mit der Welle verbundenen Teil.

Mit dem Magnetkörper ist ein Reibblech derart verbunden, dass die Ankerscheibe 4, die Spule 2, ein am Magnetkörper 1 abgestütztes, auf die Ankerscheibe 4 drückendes Federelement 3 und der Belagträger sowie das Dämpfungsblech 5 innerhalb des vom Magnetkörper

Das Dämpfungsblech 5 ist axial zwischen Spule 2 und Ankerscheibe 4 angeordnet. Die Ankerscheibe 4 ist axial zwischen Dämpfungsblech 5 und Bremsbelagträger angeordnet. Der Bremsbelagträger ist axial zwischen Ankerscheibe und Reibblech angeordnet. Das Reibblech ist axial zwischen Bremsbelagträger und einem Lagerflansch, insbesondere also Gehäuseteil des Motors, anordenbar. Beim Anmontieren des Motors wird das Reibblech an den Lagerflansch angedrückt, so dass die beim Bremsen des Bremsbelagträgers am Reibblech entstehende Reibwärme über den Lagerflansch abgeführt wird.

Die Bremsanordnung ist somit elektromagnetisch betätigbar. Denn bei Bestromung der Spule wird die Ankerscheibe 4 entgegen der vom Federelement 3 erzeugten Federkraft zur Spule 2 hingezogen. Mittels des Dämpfungsblechs 5 wird der Aufschlag der Ankerscheibe 4 auf den die Ringnut aufweisenden Materialbereich des Magnetkörpers 1 gedämpft.

Bei Nichtbestromung der Spule 2 drückt die vom Federelement 3 erzeugte Federkraft die Ankerscheibe 4 weg vom Magnetkörper, insbesondere weg von der Spule 2, auf den Bremsbelagträger, welcher dann auf die Reibscheibe gedrückt wird.

Hierzu ist die Ankerscheibe 4 drehfest, aber axial verschiebbar mit dem Magnetkörper 1 verbunden. Der Bremsbelagträger ist drehfest, aber axial verschiebbar mit der Welle verbindbar.

Das Dämpfungsblech 5 weist eine mindestens zehnmal kleinere axial gemessene Wandstärke auf als die Ankerscheibe 4.

Das Dämpfungsblech 5 ist als Lochscheibe ausgeführt und weist Erhebungen 30 auf, die in Umfangsrichtung regelmäßig voneinander beabstandet sind. Nur an den Befestigungsbereichen des Dämpfungsblechs 5 ist die regelmäßige Beabstandung unterbrochen. Dort weist nämlich das Dämpfungsblech 5 nach radial außen sich erhebende Laschenbereiche auf, welche jeweils ein Loch aufweisen, durch welches eine Befestigungsschraube hindurchgesteckt ist und das Dämpfungsblech 5 somit fixiert, also drehfest zur Ankerscheibe verbindet. In axialer Richtung ist das Dämpfungsblech 5 begrenzt durch die Ankerscheibe 4 und den Magnetkörper 1. In dem in Umfangsrichtung von den Befestigungsbereichen entfernten Bereich ist das Dämpfungsblech 5 mit einem kreisrunden Außenumfang ausgeführt.

Die Erhebungen 30 erstrecken sich radial außerhalb eines ersten Radialabstands, welcher in dem von der Spule 2 überdeckten Radialabstandsbereich liegt. Somit erstrecken sich die Erhebungen 30 jeweils über den gesamten Aufschlagsbereich am Magnetkörper, an welchem die Ankerscheibe 4 aufschlagen würde, wenn das Dämpfungsblech 5 nicht zwischengeordnet wäre.

Die Erhebungen 30 sind in radialer Richtung mindestens fünfmal weiter ausgedehnt als in Umfangsrichtung.

Zur Herstellung der Erhebungen 30 wird das Dämpfungsblech 5 aus einem Metallblech konstanter Wandstärke gefertigt und bei der Herstellung werden die Erhebungen 30 durch Verformen, insbesondere Pressen in eine entsprechende Negativform, erzeugt. Somit weist das Dämpfungsblech 5 überall im Wesentlichen eine konstante Wandstärke auf.

Die Erhebungen 30 erstrecken sich also im Wesentlichen nur in radialer Richtung.

Vorzugsweise ragen die Erhebungen 30 nur in axialer Richtung aus dem restlichen Dämpfungsblech 5 hervor. In Umfangsrichtung weisen die Erhebungen entweder eine vom Radialabstand unabhängige Breite auf, so dass sie einfach herstellbar sind oder sie weisen eine in radialer Richtung zunehmende Breite auf. Dabei ist von Vorteil, dass das Verhältnis des gesamten Umfangswinkels der erhobenen Bereiche zum gesamten Umfangswinkel der nicht erhobenen Bereiche unabhängig ist vom Radialabstand. Somit sind auch die radial weiter außen angeordneten Bereiche beim Aufschlagen der Ankerscheibe auf den Magnetkörper gut abgestützt.

Bei einem weiteren erfindungsgemäßen Ausführungsbeispiel ist das Dämpfungsblech 5 unter Vernachlässigung der axialen Wandstärke des Dämpfungsblechs 5 im von den Erhebungen 30 überdeckten Radialabstandsbereich gemäß der axialen Funktion

$$Z = \sin(N * p / 360° * 2 * Pi)$$

geformt, wobei diese Funktion unabhängig vom Radialabstand ist, N eine natürliche Zahl ist, welche größer ist als Eins und wobei p der Umfangswinkel in Grad ist. Somit ist also in Umfangsrichtung gesehen die axial Position eine Wellenfunktion.

In einem weiteren Ausführungsbeispiel ist die axiale Position durch

$$Z = \sum a\_N * \sin(N * p / 360° * 2 * Pi)$$

Wobei die Summe von N = 1 bis unendlich läuft und die zugehörigen Amplituden a_N reelle Zahlen sind. Die in den Figuren gezeigte Ausführungsform lässt sich mit einer geeigneten Folge a_N darstellen.

Bei den genannten Erhebungen 30 nimmt die Breite der jeweiligen Erhebung in radialer Richtung zu, so dass die jeweilige Erhebung einem nach radial außen geöffneten Außenkonus ähnelt.

Alternativ sind aber auch Erhebungen 30 verwendbar, welche in radialer Richtung eine konstante Breite aufweisen. Somit ist dann die tangential gemessene Breite unabhängig.

## Bezugszeichenliste

1 Magnetkörper
2 Spule
3 Federelement
4 Ankerscheibe
5 Dämpfungsblech
30 Erhebung

## Patentansprüche

1. Elektromagnetisch betätigbare Bremsanordnung zum Abbremsen einer drehbar gelagerten Welle, aufweisend einen Magnetkörper (1), eine Spule (2), ein Federelement (3), eine Ankerscheibe (4), einen Bremsbelagträger, ein Dämpfungsblech (5) und eine Reibscheibe,
   **dadurch gekennzeichnet, dass**
   das Dämpfungsblech (5) zwischen Ankerscheibe (4) und Magnetkörper (1) angeordnet ist, wobei das Dämpfungsblech (5) Erhebungen (30),
   wobei jede der Erhebungen (30) in radialer Richtung weiter ausgedehnt ist als in Umfangsrichtung, insbesondere wobei die Erhebungen (30) jeweils axial hervorragen,
   insbesondere zumindest eine Teilmenge der Erhebungen (30) in Umfangsrichtung regelmäßig voneinander beabstandet ist.

2. Bremsanordnung nach Anspruch 1,
   **dadurch gekennzeichnet, dass**
   jede der Erhebungen (30) eine in tangentialer Richtung gemessene konstante Breite aufweist
   oder dass
   jede der Erhebungen (30) eine in tangentialer Richtung gemessene Breite aufweist, die mit zunehmendem Radialabstand zunimmt, insbesondere monoton zunimmt.

3. Bremsanordnung nach mindestens einem der vorangegangenen Ansprüche,
   **dadurch gekennzeichnet, dass**
   die Spule (2) in einer ringförmigen Ausnehmung des Magnetkörpers (1) aufgenommen ist, wobei die Ringachse der ringförmigen Ausnehmung koaxial zur Drehachse der Welle ausgerichtet ist.

4. Bremsanordnung nach mindestens einem der vorangegangenen Ansprüche,
   **dadurch gekennzeichnet, dass**
   jede der Erhebungen (30) sich radial bis zum Rand des Dämpfungsblechs (5) erstreckt
   und/oder dass
   jede der Erhebungen (30) bis zum radial äußeren Randbereich des Dämpfungsblechs (5) sich erstreckt,
   und/oder dass der von jeder der Erhebungen (30) im von ihr überdeckten Umfangswinkelbereich einen Radialabstandsbereich überdeckt, dessen maximaler Radialabstandswert dem maximalen Radialabstandswert des von des Dämpfungsblechs (5) in dem selben Umfangswinkelbereich überdeckten Radialabstandsbereich gleicht.

5. Bremsanordnung nach mindestens einem der vorangegangenen Ansprüche,
   **dadurch gekennzeichnet, dass**
   das Dämpfungsblech (5) als Metallblech ausgeführt ist, insbesondere als metallisches Stanz-Biegeteil.

6. Bremsanordnung nach mindestens einem der vorangegangenen Ansprüche,
   **dadurch gekennzeichnet, dass**
   die Spule (2) in einer ringförmigen Ausnehmung des Magnetkörpers (1) aufgenommen ist, insbesondere wobei die Spule (2) in der ringförmigen Ausnehmung mit Vergussmasse vergossen ist.

7. Bremsanordnung nach mindestens einem der vorangegangenen Ansprüche,
   **dadurch gekennzeichnet, dass**
   das Federelement (3) im Magnetkörper (1) abgestützt ist und auf die Ankerscheibe (4) drückt, so dass bei Bestromung der Spule (2) die Ankerscheibe (4) entgegen der vom Federelement (3) erzeugten Federkraft zum Magnetkörper (1) hingedrückt wird und bei Nichtbestromung der Spule (2) die Ankerscheibe (4) mittels des Federelements (3) von der Spule (2), insbesondere vom Magnetkörper (1), weggedrückt wird.

8. Bremsanordnung nach mindestens einem der vorangegangenen Ansprüche,
   **dadurch gekennzeichnet, dass**
   die Ankerscheibe (4) mit dem Magnetkörper (1) drehfest, aber axial verschiebbar verbunden ist, wobei der Bremsbelagträger mit der Welle drehfest, aber axial verschiebbar verbunden ist, wobei das Reibblech mit dem Magnetkörper (1) verbunden ist, insbesondere nach Art einer Bajonettverbindung.

9. Bremsanordnung nach mindestens einem der vorangegangenen Ansprüche,
   **dadurch gekennzeichnet, dass**
   das Dämpfungsblech (5) als Lochscheibe ausgeführt ist.

10. Bremsanordnung nach mindestens einem der vorangegangenen Ansprüche,
   **dadurch gekennzeichnet, dass**
   das Dämpfungsblech (5) axial zwischen der Spule (2) und der Ankerscheibe (4) angeordnet ist

wobei die Ankerscheibe (4) axial zwischen dem Dämpfungsblech (5) und dem Bremsbelagträger angeordnet ist,

wobei der Bremsbelagträger axial zwischen der Ankerscheibe (4) und dem Reibblech angeordnet ist.

11. Bremsanordnung nach mindestens einem der vorangegangenen Ansprüche,
**dadurch gekennzeichnet, dass**
die Welle eine Außenverzahnung aufweist oder ein eine Außenverzahnung aufweisendes, mit der Welle drehfest verbundenes Teil,

wobei der Bremsbelagträger eine Innenverzahnung aufweist, die im Eingriff ist mit der Außenverzahnung,

insbesondere wobei der Bremsbelagträger drehfest aber axial verschiebbar mit der Außenverzahnung verbunden ist.

12. Bremsanordnung nach mindestens einem der vorangegangenen Ansprüche,
**dadurch gekennzeichnet, dass**
das Dämpfungsblech (5) eine im Wesentlichen konstante Wandstärke aufweist,

insbesondere eine in axialer Richtung gemessene, vom Radialabstand und vom Umfangswinkel unabhängigen Wandstärke aufweist.

**Claims**

1. An electromagnetically actuatable brake arrangement for decelerating a rotatably mounted shaft,
having a magnet body (1), a coil (2), a spring element (3), an armature disc (4), a brake lining carrier, a damping plate (5) and a friction disc,
**characterised in that**
the damping plate (5) is arranged between armature disc (4) and magnet body (1), wherein the damping plate (5) [has] protrusions (30),

wherein each of the protrusions (30) extends further in a radial direction than in a circumferential direction, in particular wherein the protrusions (30) each project axially,

in particular at least a partial quantity of the protrusions (30) are regularly spaced apart from one another in a circumferential direction.

2. A brake arrangement according to claim 1,
**characterized in that**
each of the protrusions (30) has a constant width measured in a tangential direction or **in that**
each of the protrusions (30) has a width, measured in a tangential direction, which increases as the radial spacing increases, in particular increases in a monotonic manner.

3. A brake arrangement according to at least one of the preceding claims,
**characterised in that**
the coil (2) is received in an annular cutout of the magnet body (1), wherein the annular axis of the annular cutout is oriented coaxially with the rotational axis of the shaft.

4. A brake arrangement according to at least one of the preceding claims,
**characterised in that**
each of the protrusions (30) extends radially as far as the edge of the damping plate (5) and/or **in that** each of the protrusions (30) extends as far as the radially outer edge region of the damping plate (5), and/or **in that** each of the protruberances (30), in the circumferential angular region covered thereby, covers a radial spacing region whose maximum radial spacing value equals the maximum radial spacing value of the radial spacing region covered by the damping plate (5) in the same circumferential angular region.

5. A brake arrangement according to at least one of the preceding claims,
**characterised in that**
the damping plate (5) is in the form of a metal sheet, in particular a metal stamped and bent part.

6. A brake arrangement according to at least one of the preceding claims,
**characterised in that**
the coil (2) is received in an annular cutout of the magnet body (1), in particular wherein the coil (2) is embedded in the annular cutout with sealing compound.

7. A brake arrangement according to at least one of the preceding claims,
**characterised in that**
the spring element (3) is supported in the magnet body (1) and pushes onto the armature disc (4), so that when the coil (2) is energised the armature disc (4) is pushed towards the magnet body (1) against the spring force generated by the spring element (3) and when the coil (2) is not energised the armature disc (4) is pushed away from the coil (2), in particular from the magnet body (1), by means of the spring element (3).

8. A brake arrangement according to at least one of the preceding claims,
**characterised in that**
the armature disc (4) is connected in a rotationally-fixed yet axially displaceable manner to the magnet body (1),

wherein the brake lining carrier is connected in a rotationally-fixed yet axially displaceable manner to the shaft,

wherein the friction plate is connected to the magnet body (1), in particular in the manner of a bayonet connection.

9. A brake arrangement according to at least one of the preceding claims,
   **characterised in that**
   the damping plate (5) is in the form of a perforated disc.

10. A brake arrangement according to at least one of the preceding claims,
    **characterised in that**
    the damping plate (5) is arranged axially between the coil (2) and the armature disc (4),
    wherein the armature disc (4) is arranged axially between the damping plate (5) and the brake lining carrier,
    wherein the brake lining carrier is arranged axially between the armature disc (4) and the friction plate.

11. A brake arrangement according to at least one of the preceding claims,
    **characterised in that**
    the shaft has external toothing or has a part which is connected to the shaft in a rotatioanally-fixed manner and has external toothing,
    wherein the brake lining carrier has internal toothing which engages the external toothing, in particular wherein the brake lining carrier is connected to the external toothing in a rotationally-fixed yet axially displaceable manner.

12. A brake arrangement according to at least one of the preceding claims,
    **characterised in that**
    the damping plate (5) has a substantially constant wall thickness,
    in particular has a wall thickness which is measured in an axial direction and is independent of the radial spacing and the circumferential angle.

**Revendications**

1. Dispositif de freinage à actionnement électromagnétique pour freiner un arbre monté à rotation,
   présentant un corps d'aimant (1), une bobine (2), un élément ressort (3), un disque d'induit (4), un support de garniture de frein, une tôle d'amortissement (5) et un disque de friction,
   **caractérisé en ce que**
   la tôle d'amortissement (5) est disposée entre le disque d'induit (4) et le corps d'aimant (1),
   la tôle d'amortissement (5) présentant des élévations (30),
   chacune des élévations (30) étant plus étendue dans la direction radiale que dans la direction circonférentielle,
   en particulier chacune des élévations (30) faisant saillie axialement,
   en particulier au moins un sous-ensemble des élévations (30) étant régulièrement espacées les unes des autres dans la direction circonférentielle.

2. Dispositif de freinage selon la revendication 1,
   **caractérisé en ce que**
   chacune des élévations (30) présente une largeur constante mesurée dans la direction tangentielle
   ou que
   chacune des élévations (30) présente une largeur mesurée dans la direction tangentielle qui augmente avec la distance radiale, en particulier de façon monotone.

3. Dispositif de freinage selon au moins l'une des revendications précédentes,
   **caractérisé en ce que**
   la bobine (2) est reçue dans un évidement annulaire du corps d'aimant (1), l'axe d'anneau de l'évidement annulaire étant aligné coaxialement avec l'axe de rotation de l'arbre.

4. Dispositif de freinage selon au moins l'une des revendications précédentes,
   **caractérisé en ce que**
   chacune des élévations (30) s'étend radialement jusqu'au bord de la tôle d'amortissement (5)
   et/ou que
   chacune des élévations (30) s'étend jusqu'à la zone de bord radialement extérieure de la tôle d'amortissement (5),
   et/ou que
   chacune des élévations (30), dans la plage angulaire circonférentielle qu'elle couvre, couvre une plage de distance radiale dont la valeur de distance radiale maximale est égale à la valeur de distance radiale maximale de la plage de distance radiale couverte par la tôle d'amortissement (5) dans la même plage angulaire circonférentielle.

5. Dispositif de freinage selon au moins l'une des revendications précédentes,
   **caractérisé en ce que**
   la tôle d'amortissement (5) est réalisée sous la forme d'une tôle métallique, en particulier sous la forme d'une pièce métallique découpée et pliée.

6. Dispositif de freinage selon au moins l'une des revendications précédentes,
   **caractérisé en ce que**
   la bobine (2) est reçue dans un évidement annulaire du corps d'aimant (1), la bobine (2) étant en particulier scellée dans l'évidement annulaire avec une masse de scellement.

**7.** Dispositif de freinage selon au moins l'une des revendications précédentes,
**caractérisé en ce que**
l'élément ressort (3) est supporté dans le corps d'aimant (1) et exerce une pression sur le disque d'induit (4), de telle sorte que, lorsque la bobine (2) est excitée, le disque d'induit (4) est pressé vers le corps d'aimant (1) à l'encontre de la force de ressort produite par l'élément ressort (3) et, lorsque la bobine (2) n'est pas excitée, le disque d'induit (4) est repoussé de la bobine (2), en particulier du corps d'aimant (1), au moyen de l'élément ressort (3).

**8.** Dispositif de freinage selon au moins l'une des revendications précédentes,
**caractérisé en ce que**
le disque d'induit (4) est relié au corps d'aimant (1) de manière fixe en rotation mais déplaçable axialement,
le support de garniture de frein étant relié à l'arbre de manière fixe en rotation mais déplaçable axialement,
la tôle de friction étant reliée au corps d'aimant (1), en particulier à la manière d'une liaison à baïonnette.

**9.** Dispositif de freinage selon au moins l'une des revendications précédentes,
**caractérisé en ce que**
la tôle d'amortissement (5) est réalisée sous la forme d'un disque perforé.

**10.** Dispositif de freinage selon au moins l'une des revendications précédentes,
**caractérisé en ce que**
la tôle d'amortissement (5) est disposée axialement entre la bobine (2) et le disque d'induit (4),
le disque d'induit (4) étant disposé axialement entre la tôle d'amortissement (5) et le support de garniture de frein,
le support de garniture de frein étant disposé axialement entre le disque d'induit (4) et la tôle de friction.

**11.** Dispositif de freinage selon au moins l'une des revendications précédentes,
**caractérisé en ce que**
l'arbre présente une denture extérieure ou une partie présentant une denture extérieure et reliée à l'arbre de manière fixe en rotation,
le support de garniture de frein présentant une denture intérieure qui est en prise avec la denture extérieure,
le support de garniture de frein étant en particulier relié à la denture extérieure de manière fixe en rotation mais déplaçable axialement.

**12.** Dispositif de freinage selon au moins l'une des revendications précédentes,
**caractérisé en ce que**

la tôle d'amortissement (5) présente une épaisseur de paroi sensiblement constante, en particulier une épaisseur de paroi, mesurée dans la direction axiale, indépendante de la distance radiale et de l'angle circonférentiel.

Fig. 1

Fig. 2

A

30    1

5

30

A

30

Fig. 3

30

5

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5274290 A
- DE 19622983 C1

- US 6321883 B1